(19) Europäisches Patentamt / European Patent Office / Office européen des brevets

(11) EP 3 990 508 B1

(12) # EUROPEAN PATENT SPECIFICATION

(45) Date of publication and mention of the grant of the patent:
**02.08.2023 Bulletin 2023/31**

(21) Application number: **20746749.9**

(22) Date of filing: **29.05.2020**

(51) International Patent Classification (IPC):
***C08F 220/14*** (2006.01) ***C08F 285/00*** (2006.01)
***C08L 51/00*** (2006.01) ***C08J 5/18*** (2006.01)
***C08F 2/22*** (2006.01) ***C08F 4/40*** (2006.01)

(52) Cooperative Patent Classification (CPC):
(C-Sets available)
**C08F 2/22; C08F 4/40; C08F 220/14; C08F 285/00; C08J 5/18; C08L 51/003;** C08J 2351/00 (Cont.)

(86) International application number:
**PCT/US2020/035068**

(87) International publication number:
**WO 2020/263497 (30.12.2020 Gazette 2020/53)**

(54) **ALLYLIC FUNCTIONAL THERMOPLASTIC ADDITIVE FOR UV CURABLE FLEXIBLE ACRYLIC RESIN CLEAR FILMS**

ALLYLISCHES FUNKTIONELLES THERMOPLASTISCHES ADDITIV FÜR UV-HÄRTBARE FLEXIBLE ACRYLHARZ-KLARSICHTFOLIEN

ADDITIF THERMOPLASTIQUE FONCTIONNEL ALLYLIQUE POUR LES FILMS TRANSPARENTS EN RÉSINE ACRYLIQUE SOUPLE DURCISSABLE AUX UV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 US 201962868030 P**

(43) Date of publication of application:
**04.05.2022 Bulletin 2022/18**

(73) Proprietor: **Rohm and Haas Company**
**Collegeville, PA 19426 (US)**

(72) Inventors:
- **GUO, Hailan**
**Collegeville, PA 19426 (US)**
- **WILLS, Morris**
**Collegeville, PA 19426 (US)**

(74) Representative: **Beck Greener LLP**
**Fulwood House**
**12 Fulwood Place**
**London WC1V 6HR (GB)**

(56) References cited:
**WO-A1-2018/033444** **US-A1- 2012 164 364**
**US-A1- 2017 253 734**

- **ABDRAZAKOVA L R ET AL: "FTIR spectroscopy of conformational probes introduced into fullerene-containing branched poly (methyl methacrylate)", JOURNAL OF PHYSICS: CONFERENCE SERIES, INSTITUTE OF PHYSICS PUBLISHING, BRISTOL, GB, vol. 714, no. 1, 24 May 2016 (2016-05-24), page 12001, XP020302739, ISSN: 1742-6596, DOI: 10.1088/1742-6596/714/1/012001 [retrieved on 2016-05-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/14, C08F 220/40;**
**C08L 51/003, C08L 33/12**

## Description

FIELD OF THE INVENTION

The field of this invention is flexible acrylic resin compositions and films made from such compositions.

BACKGROUND

A variety of indoor and outdoor products benefit from use of flexible, transparent and weather resistant plastic materials. Fluorine containing polymers and thermoplastic polyurethanes provide those characteristics but are too expensive for many end uses. Lower cost resins such as polyvinylchloride with plasticizer or polyethylene resins may not meet all performance requirements. Certain of these polymers may have undesirable environmental impact.

Various acrylic resins have also been proposed. However, many are too rigid for certain end uses, possess high moduli or poor tear resistance. One commercial acrylic resin contains block copolymers of poly(methylmethacyrylate) and poly(butylacrylate) produced by anionic polymerization. While these resins are flexible and have whitening resistance, they are prohibitively expensive for certain applications. Multi-stage acrylic polymers have been taught as an alternative (See, e.g., U.S. Patent No. 10,040,915). These materials tend to be highly viscous (Melt flow index or rates in the range of 10 g/10 minutes at 220 °C, 10 kg) which makes processing challenging in certain applications.

Branched acrylic polymers have also been proposed. For example, Isaure et al., J. Mater. Chem., 2003, 13, 2701-2710, disclose branched copolymers comprising methyl methacrylate (MMA), a chain transfer agent (CTA), and ethylene glycol dimethacrylate (EGDMA). In these branched acrylic copolymers, Isaure found that at most 4.5% of the pendent double bonds from the EGDMA remain unreacted. US 2017253734A1 discloses a polymer blend comprising from 20 to 90 parts by weight, based on the total weight of the polymer blend, polyvinyl chloride resin and from 10 to 80 parts by weight, based on the total weight of the polymer blend, a flexible acrylic polymer. Journal of Physics: Conference Series 714 (2016*)* discloses a branched polymer, wherein the branched polymer is an emulsion reaction product of reactants comprising ≈ 96.67 wt. % of butyl acrylate, ≈ 0.96 wt.% of tert-dodecyl mercaptan as a chain transfer agent and ≈ 2.37 wt.% of allyl methacrylate as a crosslinker.

SUMMARY OF THE INVENTION

Disclosed herein is a composition comprising a multi-stage flexible acrylic resin and a branched polymer which is a reaction product of reactants comprising one or more monoethylenically unsaturated ester monomers, a chain transfer agent in an amount of 0.1 to 15 weight percent, and a crosslinker in an amount of 0.1 to 15 weight percent of a crosslinker, wherein weight percent is based on total amount of reactants, provided the amount of crosslinker is within +/- 5 weight percent the amount of chain transfer agent, and wherein the crosslinker comprises at least two carbon-carbon double bonds having different reactivity. The branched polymer is not cross-linked.

Also disclosed herein is a film comprising a layer of the above composition, wherein the layer is no greater than 150 microns, is transparent and does not show crease whitening.

DETAILED DESCRIPTION OF THE INVENTION

Disclosed herein is a composition comprising a multi-stage flexible acrylic resin and a branched polymer comprising a crosslinker having at least two carbon-carbon double bonds having different reactivity. The inventors have found that the viscosity of the multi-stage flexible acrylic resin is too high to allow the resin to be used in certain applications, such as when there is a desire to extrude very thin films or in certain injection molding applications. Increasing processing temperature can cause the resin to degrade. Addition of low molecular weight linear additives can lower the viscosity (increase the melt flow index) but the inventors found that the resulting products in some instances showed crease whitening which can be indicative of phase separation in the mixture. Surprisingly, the inventors have found that the branched polymers as disclosed lower the viscosity without showing undesirable crease whitening. In addition, compositions having the branched polymers additives can show improved tensile properties and broader processing windows as compared to similar compositions having a linear additive. The inventors have also surprisingly found that a branched polymer comprising a crosslinker having at least two carbon-carbon double bonds having different reactivity can produce a branched acrylic copolymer in which at least 80% of the pendent double bonds remain unreacted.

According to certain embodiments, the multi-stage flexible acrylic resin comprises a multi-stage sequential polymer composition comprising a first stage crosslinked acrylic polymer composition which forms a core, one or more intermediate layer acrylic polymer compositions, and an outer layer acrylic polymer composition wherein the core and the intermediate layer(s) and outer layer differ in one or more of the following respects: being derived from different acrylate monomers, degree of cross linking (intermediate and outer layers may or may not be cross linked), and glass

transition temperature. The acrylic polymer compositions are formed from reaction mixtures comprising one or more hydrocarbyl acrylates or hydrocarbyl methacrylates, optional cross linkers (except some cross linker is required for core), optional chain transfer agents. According to certain embodiments the multi-stage flexible acrylic resin comprises a first stage which is the reaction product of one or more monomers selected from the group consisting of alkyl acrylates and alkyl methacrylates with one or more crosslinking monomers, graft-linking monomers or combinations thereof. According to certain embodiments the amount of units derived from the alkyl acrylate and/or alkyl methacrylate monomers is in the range of 95 to 99.9 weight percent of the first stage and the amount of units derived from the cross-linking monomer and/or graft linking monomers is 0.1 to 5 weight percent. According to certain embodiments this first stage is cross-linked with a Tg in the range of -85 to -10 °C. The first stage is sometimes referred to as the core. The resin comprises one or more intermediate stage layers. Each of the intermediate layers comprises from 93 to 100 weight percent of units derived from a one or more monomers selected from the group consisting of alkyl acrylates and alkyl methacrylates, from 0 to 5 weight percent of units derived from a cross-linking monomer, a graft-linking monomer, or a combination thereof, optionally from 0 to 2.0 weight percent units derived from one or more chain transfer agents; wherein there is a compositional gradient between the intermediate layers such that the Tg transitions from -30°C to 70°C over the width of the intermediate region. The resin further includes an outer stage or an outermost layer which comprises from 98.5 to 100 weight percent units derived from one or more monomers selected from the group consisting of alkyl acrylate, alkyl methacrylate, and styrenic monomers, and combinations thereof, from 0 to 1.5 weight percent units derived from one or more chain transfer agents, and has a Tg of from 40 °C to 110 °C.

The crosslinked core comprises greater than 95 to 99.9 weight percent of units derived from one or more monomers selected from the group consisting of alkyl acrylate or alkyl methacrylate monomers. All individual values and subranges from 95 to 99.9 weight percent are included herein and disclosed herein; for example, the amount of units derived from one or more alkyl acrylate or alkyl methacrylate monomers can be from a lower limit of 95, 95.5, 96, 96,5, 97, 975, 98, 98.5, 99, or 99.5 weight percent to an upper limit of 95.3, 95.8, 96.3, 96.9, 97.5, 98, 98.7, 99.4 or 99.9 weight percent. For example, the amount of units derived from one or more alkyl acrylate or alkyl methacrylate monomers may be in the range of from 95 to 99.9 weight percent, or in the alternative, the amount of units derived from one or more alkyl acrylate or alkyl methacrylate monomers may be in the range of from 95 to 97.5 weight percent, or in the alternative, amount of units derived from one or more alkyl acrylate or alkyl methacrylate monomers may be in the range of from 97.8 to 99.9 weight percent, or in the alternative, the amount of units derived from one or more alkyl acrylate or alkyl methacrylate monomers may be in the range of from 96.5 to 97.9 weight percent.

The crosslinked core comprises from 0.1 to 5 weight percent of units derived from a cross-linking monomer, graft-linking monomer, or combination thereof. All individual values and subranges from 0.1 to 5 weight percent are included herein and disclosed herein; for example, the amount of units derived from cross-linking monomer, graft-linking monomer, or combination thereof can be from a lower limit of 0.1, 0.7, 1.2, 1.9, 2.6, 3.1, 3.7, 4.4, or 4.9 weight percent, to an upper limit of 0.2, 0.8, 1.4, 2.1, 2.7, 3.3, 3.8, 4.5 or 5 weight percent. For example, the amount of units derived from cross-linking monomer, graft-linking monomer, or combination thereof may be in the range of from 0.1 to 5 weight percent, or in the alternative, the amount of units derived from cross-linking monomer, graft-linking monomer, or combination thereof may be in the range of from 0.5 to 2.5 weight percent, or in the alternative, the amount of units derived from cross-linking monomer, graft-linking monomer, or combination thereof may be in the range of from 1.0 to 4.0 weight percent, or in the alternative, the amount of units derived from cross-linking monomer, graft-linking monomer, or combination thereof may be in the range of from 0.3 to 3.5 weight percent.

The crosslinked core has a Tg of from -85 to -10 °C. All individual values and subranges from -70 to -10 °C are included herein and disclosed herein; for example, the Tg of the crosslinked core can be from a lower limit of -85, -80 -70, -60, -50, -40, -30, -20, or -15 °C to an upper limit of -75, -65, -55, -45, -35, -25, -17 or -10 °C. For example, the Tg of the crosslinked core may be in the range of from -85 to -10 °C, or in the alternative, the Tg of the crosslinked core may be in the range of from -60 to -40 °C, or in the alternative, the Tg of the crosslinked core may be in the range of from -70 to -50 °C, or in the alternative, the Tg of the crosslinked core may be in the range of from -50 to -30 °C.

The intermediate region comprises one or more intermediate layers. All individual values and subranges from one or more intermediate layers are disclosed herein and included herein. For example, the intermediate region may comprise one, two, three, four, or five intermediate layers.

Each of the intermediate layers comprises up to 100 weight percent of units derived from a one or more monomers selected from the group consisting of alkyl acrylate or alkyl methacrylate monomers. All individual values and subranges up to 100 weight percent are included herein and disclosed herein; for example, the amount of units derived from one or more alkyl (meth)acrylate monomers can be from a lower limit of 88.5, 89.4, 90.7, 91.8, 92.6, 93.7, 94, 94.9, 95.5, 96, 97.4, 98.1, 99.3, 99.9 or 100 weight percent. For example, the amount of units derived from one or more alkyl acrylate or alkyl methacrylate monomers may be in the range of from 88.5 to 100 weight percent, or in the alternative, the amount of units derived from one or more alkyl acrylate or alkyl methacrylate monomers may be in the range of from 90.5 to 99.9 weight percent, or in the alternative, the amount of units derived from one or more alkyl acrylate or alkyl methacrylate monomers may be in the range of from 88.5 to 94.9 weight percent, or in the alternative,

the amount of units derived from one or more alkyl acrylate or alkyl methacrylate monomers may be in the range of from 92.5 to 96 weight percent.

Each of the intermediate layers comprises from 0 to 5 weight percent of units derived from a cross-linking monomer, a graft-linking monomer, or a combination of two or more thereof. All individual values and subranges are disclosed herein and included herein; for example, the amount of units derived from a cross-linking monomer, a graft-linking monomer, or a combination thereof may be from a lower limit of 0, 0.5, 1, 1.5, 2, 2.5, 3, 3.5, 4, or 4.5 weight percent to an upper limit of 0.2, 0.7, 1.2, 1.7, 2.5, 2.7, 3.2, 3.7, 4.2, 4.7, or 5 weight percent. For example, the amount of units derived from a cross-linking monomer, a graft-linking monomer, or a combination of two or more thereof may be in the range of from 0 to 5 weight percent, or in the alternative, the amount of units derived from a cross-linking monomer, a graft-linking monomer, or a combination of two or more thereof may be in the range of from 0 to 2.5 weight percent, or in the alternative, the amount of units derived from a cross-linking monomer, a graft-linking monomer, or a combination of two or more thereof may be in the range of from 2.5 to 5 weight percent, or in the alternative, the amount of units derived from a cross-linking monomer, a graft-linking monomer, or a combination of two or more thereof may be in the range of from 2 to 4 weight percent.

Each of the intermediate layers optionally comprises from 0 to 2.0 weight percent units derived from one or more chain transfer agents. All individual values and subranges from 0 to 2.0 weight percent are included herein and disclosed herein; for example, the amount of units derived from one or more chain transfer agents can be from a lower limit of 0, 0.2, 0.4, 0.6, 0.8, 1.0, 1.2, 1.4, 1.6, 1.8, or 2.0 weight percent to an upper limit of 0.1, 0.3, 0.5, 0.7, 0.9, 1.1, 1.3, 1.7, or 1.9 weight percent. For example, the amount of units derived from one or more chain transfer agents may be in the range of from 0 to 2.0 weight percent, or in the alternative, the amount of units derived from one or more chain transfer agents may be in the range of from 0.75 to 2.0 weight percent, or in the alternative, the amount of units derived from one or more chain transfer agents may be in the range of from 0 to 0.75 weight percent, or in the alternative, the amount of units derived from one or more chain transfer agents may be in the range of from 0.5 to 1.0 weight percent.

There is a compositional gradient between the intermediate layers such that the Tg transitions from -30°C to 70°C over the width of the intermediate region. All individual values and subranges from -30°C to 70°C are included herein and disclosed herein; for example, the Tg can transition from a lower limit of -30, -20, -10, 0, 10, 20, 30, 40,50, or 60 °C to an upper limit of -25, -15, -5, 5, 15, 45, or 70 °C. For example, the Tg can transition over the range of from -30 to 70 °C, or in the alternative, the Tg can transition over the range of from -10 to 30 °C, or in the alternative, the Tg can transition over the range of from -30 to -15 °C, or in the alternative, or in the alternative, the Tg can transition over the range of from -25 to 0 °C, or in the alternative, the Tg can transition over the range of from 0 to 15 °C, or in the alternative, the Tg can transition over the range of from -15 to 55 °C, or in the alternative, the Tg can transition over the range of from 5 to 35 °C.

The outermost layer comprises from 98.5 to 100 weight percent units derived from one or more monomers selected from the group consisting of alkyl (meth)acrylate, styrenic monomers, and combinations of two or more thereof. All individual values and subranges from 98.5 to 100 weight percent are included herein and disclosed herein; for example, the amount of units derived from one or more monomers selected from the group consisting of alkyl (meth)acrylate, styrenic monomers, and combinations of two or more thereof can be from a lower limit of 98.5, 98.7, 98.9, 99.1, 99.3, 99.5, 99.7, or 99.9 weight percent to an upper limit of 98.6, 98.8, 99, 99.2, 99.4, 99.6, 99.8 or 100 weight percent. For example, the amount of units derived from one or more monomers selected from the group consisting of alkyl (meth)acrylate, styrenic monomers, and combinations of two or more thereof may be in the range of from 98.5 to 100 weight percent, or in the alternative, the amount of units derived from one or more monomers selected from the group consisting of alkyl (meth)acrylate, styrenic monomers, and combinations of two or more thereof may be in the range of from 98.5 to 100 weight percent, or in the alternative, the amount of units derived from one or more monomers selected from the group consisting of alkyl acrylates, alkyl methacrylates, and styrenic monomers, and combinations of two or more thereof may be in the range of from 98.5 to 100 weight percent, or in the alternative, the amount of units derived from one or more monomers selected from the group consisting of alkyl acrylates, alkyl methacrylates, styrenic monomers, and combinations of two or more thereof may be in the range of from 98.5 to 100 weight percent, or in the alternative, the amount of units derived from one or more monomers selected from the group consisting of alkyl (meth)acrylate, styrenic monomers, and combinations of two or more thereof may be in the range of from 98.5 to 99.6 weight percent, or in the alternative, the amount of units derived from one or more monomers selected from the group consisting of alkyl acrylates, alkyl methacrylates, styrenic monomers, and combinations of two or more thereof may be in the range of from 96.5 to 100 weight percent.

The outermost layer comprises from 0 to 1.5 weight percent units derived from one or more chain transfer agents. All individual values and subranges from 0 to 1.5 weight percent are included herein and disclosed herein; for example, the amount of units derived from one or more chain transfer agents can be from a lower limit of 0, 0.2, 0.4, 0.6, 0.8, 1, 1.2, or 1.4 weight percent to an upper limit of 0.1, 0.3, 0.5, 0.7, 0.9, 1.1, 1.3, or 1.5 weight percent. For example, the amount of units derived from one or more chain transfer agents may be in the range of from 0 to 1.5 weight percent, or in the alternative, the amount of units derived from one or more chain transfer agents may be in the range

of from 0 to 0.75 weight percent, or in the alternative, the amount of units derived from one or more chain transfer agents may be in the range of from 0.75 to 1.5 weight percent, or in the alternative, the amount of units derived from one or more chain transfer agents may be in the range of from 0.3 to 1.2 weight percent.

The outermost layer has a Tg of from 40 °C to 110 °C. All individual values and subranges from 50 °C to 1 10 °C are included herein and disclosed herein; for example, the Tg of the outermost layer can be from a lower limit of 40, 43, 45, 50, 60, 70, 80, 90, or 100 °C to an upper limit of 55, 65,75, 85, 95, 105, or 110 °C. For example, the Tg of the outermost layer may be in the range of from 40 °C to 110 °C, or in the alternative, the Tg of the outermost layer may be in the range of from 45 °C to 80 °C, or in the alternative, the Tg of the outermost layer may be in the range of from 75 °C to 110 °C, or in the alternative, the Tg of the outermost layer may be in the range of from 65 °C to 95 °C.

For the above Tgs of copolymers may be calculated with the Fox equation [Bulletin of the American Physical Society 1 , 3 Page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, based on weight of monomers charged to the reaction vessel, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The glass transition temperatures of homopolymers for the purposes of this invention are those reported in "Polymer Handbook", edited by J. Brandrup and E. H. Immergut, Interscience Publishers, 1966, unless that publication does not report the Tg of a particular homopolymer, in which case the Tg of the homopolymer is measured by differential scanning colorimetry (DSC).

The alkyl of the alkyl acrylate or alkyl methacrylate may be a linear or branched alkyl group with 1 to 12 carbon atoms. Exemplary monomers include Exemplary useful alkyl groups include butyl acrylate, ethyl hexyl acrylate, ethyl acrylate, methyl methacrylate, butyl methacrylate, and iso-octylacrylate.

Examples of cross-linking and/or graft-linking monomers useful in the crosslinked core and intermediate layers include, for example, butanediol diacrylate, butanediol dimethacrylate, ethylene glycol diacrylate, ethylene glycol dimethacrylate, divinyl benzene, diethylene glycol diacrylate, diethylene glycol dimethacrylate, diallyl maleate, allyl methacrylate, diallyl phthalate, triallyl phthalate, trimethylolpropane triacrylate, trimethylolpropane trimethacrylate blends thereof and combinations of two or more thereof.

Preferably, the composition comprises the multi-stage flexible acrylic resin in amounts of at least 15, 20, 30, 40, 50, 60, 70, 75, or 80 weight percent and no more than 95 or 90 weight percent based on total weight of the composition.

According to certain aspects the flexible acrylic resin may be blended with another polymer. Examples of such polymers include acrylate or acrylic polymers such as poly(methylmethacrylate), polyesters, polycarbonates, polyamides, and halogenated polyolefins having at least 20 or at least 40 weight percent halogen, such as polyvinylchloride.

The branched polymer is a reaction product of reactants comprising one or more monoethylenically unsaturated ester monomers, a chain transfer agent in an amount of 0.1 to 15 weight percent, and a crosslinker in an amount of 0.1 to 15 weight percent of a crosslinker, wherein weight percent is based on total amount of reactants.

Preferably, the chain transfer agent is present in an amount of at least 0.5 weight percent, at least 1 weight percent, at least 2 weight percent, or at least 3 weight percent. Preferably, the chain transfer agent is present in an amount less than or equal to 14 weight percent, less than or equal to 13 weight percent, less than or equal to 12 weight percent, less than or equal to 11 weight percent, or less than or equal to 10 weight percent.

The crosslinker is a polyfunctional unsaturated monomer comprising at least two carbon-carbon double bonds having different reactivity. Preferably, the crosslinker is selected from allyl methacrylate, allyl acrylate, and combinations thereof. In allyl (meth)acrylate, the allyl group has a different reactivity than the vinyl group. Conventional crosslinkers, such as di(meth)acrylates, have carbon-carbon double bonds with identical reactivity. Using NMR spectroscopy, the inventors have found that the pendent double bonds using crosslinkers having identical reactivity are almost entirely reacted during polymerization to form branch points. The crosslinkers according to the present invention remain substantially unreacted, e.g., at least 80% of the pendent double bonds remain unreacted following polymerization. These unreacted pendent double bonds provide additional opportunity for further grafting.

The branched polymer is not crosslinked. To avoid crosslinking, the amount of crosslinker is within +/- 5 weight percent the amount of chain transfer agent. Preferably, the amount of crosslinker is within +/- 4 weight percent the amount of chain transfer agent. More preferably, the amount of crosslinker is within +/- 3 weight percent the amount of chain transfer agent.

Surprisingly, the inventors have found that the amount of crosslinker may exceed the amount of chain transfer agent while still forming a branched polymer. Crosslinkers having functional groups with similar activity will form crosslinked polymers when the amount of crosslinker in moles exceeds the amount of chain transfer agent in moles.

According to the present invention, the amount of crosslinker in moles can exceed the amount of chain transfer agent without forming a crosslinked polymer.

Suitable monoethylenically unsaturated ester monomers useful in making the branched polymer according to certain embodiments can have the structure R'-C(O)O-R where R is a hydrocarbyl group (e.g. alkyl group or aryl group) and R' is a monoethylenically unsaturated aliphatic group having at least 2 or 3 carbon atoms. Preferably, R is an alkyl group of at least 1 or 2 or 3 carbon atoms. According to certain embodiments R is an alkyl group having no more than 12 or 10 or 8 or 6 or 5 carbon atoms. According to certain embodiments R is an aryl group of 6 to 12 carbon atoms. According to certain embodiments R' has no more than 6 carbon atoms. Examples of suitable monomers include methyl acrylate, butyl acrylate, ethyl hexyl acrylate, ethyl acrylate, methyl methacrylate, butyl methacrylate, cyclohexyl (meth)acrylate, cyclopentyl methacrylate, tetrahydrofurfyl methacrylate, and benzyl (meth)acrylate. Preferably, the monoethylenically unsaturated ester monomers are selected from methyl methacrylate and butyl methacrylate. Combinations of two or more such monoethylenically unsaturated ester monomer may be used. For example, a combination of methyl methacrylate and butyl methacrylate can be used. For example, the amount of methyl methacrylate can be at least 20, 30, 40, 50, 60, 70 or 80 weight percent of the reactants and can be for example less than 99.8, 99, 98, 97, 96, 95, 90, or 85 weight percent of the reactants. A second monoethylenically unsaturated ester monomer (e.g. butyl acrylate) can be 0 or greater than 0, 1, 2, 3, 4, or 5 weight percent of the reactants and less than 60, 50, 40, 30, 20, or 10 of the reactants. In certain embodiments, additional monoethylenically unsaturated ester monomers may be used. The combination of the second and additional monoethylenically unsaturated monomer(s) taken together in such embodiments is greater than 0, 1, 2, 3, 4, or 5 weight percent of the reactants and less than 60, 50, 40, 30, 20, or 10 of the reactants.

According to certain embodiments one or more additional monounsaturated addition-polymerizable (e.g., monoethylenically unsaturated) monomers may be included. For example, styrene or acrylonitrile could be added. The amount of such additional monounsaturated addition-polymerizable monomer is preferably less than 10 or 5 weight percent based on weight of the reactants.

Preferably, the monoethylenically unsaturated ester monomer is present in the branched monomer in an amount of at least 65 weight percent based on the total weight of the reactants forming the branched monomer, such as, for example, at least 70 weight percent, at least 75 weight percent, at least 80 weight percent, at least 85 weight percent, or at least 90 weight percent.

The reactants further comprise a chain transfer agent (CTA). The chain transfer agent may be any compound known or found to be useful as a chain transfer agent in polymerization of acrylate or methacrylate monomers. For example, thiol chain transfer agents can be used. Examples of such thiol CTAs include monofunctional and polyfunctional thiols. Monofunctional thiols include, but are not limited to, propyl mercaptan, butyl mercaptan, hexyl mercaptan, octyl mercaptan, dodecyl mercaptan, thioglycolic acid, mercaptopropionic acid, alkyl thioglycollates, e.g. 2-ethyl hexyl thioglycollate or octylthioglycollate, mercaptoethanol, mercaptoundecanoic acid, thiolactic acid, and thiobutyric acid. Polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; octafunctional thiols such as tripentaerythritol octa(3-mercaptopropionate), and tripentaerythritol octathioglycollate. The use of polyfunctional thiols is a useful way to increase the degree of branching in the polymer. Optionally, the chain transfer agent may comprise a mixture of more than one type of compound. Preferably, the CTA is

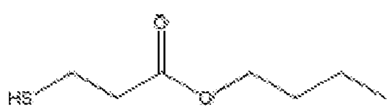

butyl 3-mercaptopropionate (BMP)

.

Alternative chain transfer agents may be any species known to reduce molecular weight in the conventional free-radical polymerization of vinyl monomers. Examples include sulphides, disulphides, halogen-containing species. Also, catalytic chain transfer agents such as cobalt complexes, e.g. cobalt (II) chelates such as cobalt porphyrin compounds are useful chain transfer agents for the invention. Suitable cobalt chelates are known in the art and are described in WO 98/04603. A particularly suitable compound is bis(borondifluorodimethylglyoximate) cobaltate (II) also known as CoBF. Catalytic chain transfer agents may be used in relatively low concentrations compared to conventional thiol chain transfer agents, e.g. <0.5%, preferably < 0.1% by weight (on monofunctional monomer), since they are generally highly effective at low concentrations. We have surprisingly found that catalytic chain transfer compounds based on cobalt complexes may be very effectively used at concentrations of less than 0.05% by weight (500 ppmw), e.g. 0.0001-0.01% by weight (1-100 ppmw) based on monofunctional monomer in the polymerization process of the present invention to

give soluble branched polymers.

According to certain embodiments the cross linker is allyl methacrylate (ALMA), the chain transfer agent is BMP, and the monoethylenically unsaturated ester monomer is methyl methacrylate (MMA) or butyl methacrylate (BMA). Preferably, the MMA or BMA is present in amounts of from 80 to 98 weight percent, the amount of ALMA is in the range of 1 or 10 weight percent, and the amount of ALMA is in the range of 1 to 10 weight percent based on total weight of MMA or BMA, BMP and ALMA.

The branched polymer can be made using any free-radical polymerization method, e.g. solution, suspension, emulsion and bulk polymerization methods may all be used. For example, conventional emulsion polymerization may be used.

A surfactant or emulsifier may be used to form the branched polymer. Examples of emulsifiers include nonionic, anionic and cationic emulsifiers.

Suitable nonionic emulsifiers are araliphatic or aliphatic nonionic emulsifiers, examples being ethoxylated mono-, di-, and trialkylphenols (degree of ethoxylation: 3 to 50, alkyl radical: $C_4$-$C_{10}$), ethoxylates of long-chain alcohols (degree of ethoxylation: 3 to 100, alkyl radical: $C_8$-$C_{36}$), and also polyethylene oxide/polypropylene oxide homopolymers and copolymers. These may comprise the alkylene oxide units copolymerized in random distribution or in the form of blocks. Highly suitable are, for example, ethylene oxide/propylene oxide block copolymers. Preference is given to using ethoxylates of long-chain alkanols (alkyl radical $C_1$-$C_{30}$, average degree of ethoxylation 5 to 100) and, among these, particular preference to those having a linear $C_{12}$-$C_{20}$ alkyl radical and an average degree of ethoxylation of 10 to 50, and also ethoxylated monoalkylphenols.

Suitable anionic emulsifiers are, for example, alkali metal and ammonium salts of alkyl sulfates (alkyl radical: $C_8$-$C_{22}$), of sulfuric monoesters with ethoxylated alkanols (degree of ethoxylation: 2 to 50, alkyl radical: $C_{12}$-$C_{18}$) and with ethoxylated alkylphenols (degree of ethoxylation: 3 to 50, alkyl radical: $C_4$-$C_9$), of alkylsulfonic acids (alkyl radical: $C_{12}$-$C_{18}$) and of alkylarylsulfonic acids (alkyl radical: $C_9$-$C_{18}$). Further suitable emulsifiers are found in Houben-Weyl, Methoden der organischen Chemie, volume XIV/1, Makromolekulare Stoffe, Georg-Thieme-Verlag, Stuttgart, 1961, pp. 192-208. Also suitable as anionic emulsifiers are bis(phenylsulfonic acid) ethers and their alkali metal or ammonium salts which carry a $C_4$-$C_{24}$ alkyl group on one or both aromatic rings. These compounds are common knowledge, from U.S. Pat. No. 4,269,749, for example, and are available commercially, in the form for example of Dowfax™ 2A1 (Dow Chemical Company).

Suitable cationic emulsifiers are preferably quaternary ammonium halides, e.g., trimethylcetylammonium chloride, methyltrioctylammonium chloride, benzyltriethylammonium chloride or quaternary compounds of N-$C_6$-$C_{20}$-alkylpyridines, - morpholines or -imidazoles, e.g., N-laurylpyridinium chloride.

The amount of emulsifier (or surfactant) can be at least 0.01 or 0.1 weight percent to 10 or 5 weight percent, based on the amount of monomers to be polymerized in the formation of the branched polymer.

Initiators may be used to form the branched polymer. Examples of initiators may be initiated by any suitable method of generating free-radicals such as by thermally induced decomposition of a thermal initiator such as an azo compound, peroxide or peroxyester. Therefore, the polymerization mixture also preferably contains a polymerization initiator which may be any of those known and conventionally used in free-radical polymerization reactions. Examples of azo initiators include azobis(isobutyronitrile) (AIBN), azobis(2-methylbutyronitrile), azobis(2,4-dimethylvaleronitrile), azobis(4-cyanovaleric acid). Examples of peroxide and peroxy initiators include hydrogen peroxide, sodium peroxide, potassium peroxide, t-butyl hydroperoxide, cumene hydroperoxide, dilauroyl peroxide, tert-butyl peroxyneodecanoate, dibenzoyl peroxide, cumyl peroxide, tert-butyl peroxy-2-ethyl hexanoate, tert-butyl peroxy diethyl acetate and tert-butyl peroxy benzoate. Examples of additional initiators include ammonium and/or alkali metal persulfates, sodium perborate, perphosphoric acid and salts thereof, potassium permanganate, and ammonium or alkali metal salts of peroxydisulfuric acid, examples being alkali metal or ammonium peroxy disulfates, diacetyl peroxide, dibenzoyl peroxide, succinyl peroxide, di-tert-butyl peroxide, tert-butyl perbenzoate, tert-butyl perpivalate, tort-butyl peroxy-2-ethylhexanoate, tert-butyl permaleinate, cumene hydroperoxide, diisopropyl peroxydicarbamate, bis(o-toluoyl)peroxide, didecanoyl peroxide, dioctanoyl peroxide, dilauroyl peroxide, tert-butyl perisobutyrate, tert-butyl peracetate, di-tert-amyl peroxide, tert-butyl hydroperoxide, azobisisobutyronitrile, 2,2'-azobis(2-amidino-propane)dihydrochloride or 2,2'-azobis(2-methylbutyronitrile). Also suitable are mixtures of these initiators. As initiators it is also possible to use reduction/oxidation (i.e., redox) initiator systems. The redox initiator systems are composed of at least one, usually inorganic, reducing agent and one organic or inorganic oxidizing agent. The oxidizing component comprises, for example, the emulsion polymerization initiators already specified above. The reducing component comprises, for example, alkali metal salts of sulfurous acid, such as sodium sulfite, sodium hydrogen sulfite, alkali metal salts of disulfurous acid such as sodium disulfite, bisulfite addition compounds of aliphatic aldehydes and ketones, such as acetone bisulfite or reducing agents such as hydroxymethanesulfinic acid and salts thereof, or ascorbic acid. The redox initiator systems can be used along with soluble metal compounds whose metallic component is able to occur in a plurality of valence states. Typical redox initiator systems are, for example, ascorbic acid/iron(II)sulfate/sodium peroxodisulfate, tert-butyl hydroperoxide/sodium disulfite, tert-butyl hydroperoxide/Na hydroxymethanesulfinate. The individual components, the reducing component for example,

may also be mixtures, an example being a mixture of the sodium salt of hydroxymethanesulfinic acid and sodium disulfite.

The amount of initiator is generally at least 0.01 or 0.05 or 0.01 weight percent to 10 or 5 or 3 weight percent based on all of the monomers to be polymerized.

The branched polymers are not cross-linked. For example, this can be demonstrated by evaluating the solubility of the polymers in a solvent such as tetrahydrofuran. A cross-linked polymer will not be soluble.

The branched polymers according to certain embodiments can be characterized by a polymer branching ratio, g', of less than 1, 0.95, 0.9, 0.8. According to some embodiments g' is at least 0.5 or 0.6 or 0.7. The polymer branching ratio (g') is calculated by comparing measured the intrinsic viscosity of the branched polymer ($[\eta]_{branched)}$ at each elution volume increment to the intrinsic viscosity of the linear polymer ($[\eta]_{linear}$) with the same molecular weight (M) (Eq. 1) in gel permeation chromatography (GPC) analysis. For a linear polymer, g' value equals to 1 and, for a branched polymer, g' is smaller than 1.

$$g' = \left(\frac{[\eta]_{branched}}{[\eta]_{linear}}\right)_M \qquad \text{(Eq. 1)}$$

Molecular Weight Analysis: The polymer absolute molecular weights ($M_w$, $M_n$), PMMA-relative molecular weights ($M_{w_PMMA}$, $M_{n_PMMA}$), intrinsic viscosity ($[\eta]_w$, $[\eta]_n$), and branching ratio (g') can be measured by gel permeation chromatography with online multi-angle light scattering (MALS) detector, viscometer (VS), and differential refractive index (dRI) detector. For example, the GPC instrument setup can include an Agilent 1200 series HPLC system (degasser, pump, autosampler and column oven), a Wyatt HELEOS II MALS detector, a Wyatt ViscoStar II viscometer, and a Wyatt T-rEX dRI detector. The polymer separation can be carried out on a column set e.g. having two PLgel mixed B LS columns (10 $\mu$m particle size, 7.5 x 300 mm length) using tetrahydrofuran (THF) as the mobile phase at a flow rate of 1 mL/min. Column oven temperature is set at 30 °C. A set of 10 points PMMA standards (Agilent EasiCal PM-1) is used to calibrate the GPC columns and provide the PMMA-relative molecular weight. The absolute molecular weights are obtained from the MALS detection using Zimm formalism and the intrinsic viscosity data are obtained from the viscometer. High molecular weight fractions data (PMMA-relative molecular weight larger than 6500 Da) are used to calculate average g' values. For consistency of g' calculation, a linear PMMA model from Mark-Houwink equation (Eq. 2, where K = 0.0383 mL/g and $\alpha$ = 0.581 for non-BA containing samples in Table 2 and K = 0.03044 mL/g and $\alpha$ = 0.615 for BA containing polymers in Table 2) is used to obtain the ($[\eta]_{linear}$) in Eq. 1 using the M data from MALS detection.

$$[\eta] = KM^{\alpha} \qquad \text{(Eq. 2)}$$

The weight average molecular weight, $M_w$, as measured by GPC of the branched polymer is according to certain embodiments in the range of at least 2,500 or 3,000 or 5,000 or 10,000 or 20,000 or 25,000 g/mol. According to certain embodiments weight average molecular weight is no more than 75,000 or 50,000 g/mol. The number average molecular weight, $M_n$, of the branched polymer as measured by GPC according to certain embodiments is at least 1,250 or 1,500 g/mol. According to certain embodiments the number average molecular weight is no more than 6,000 or 5,000 or 4,500 g/mol.

According to certain embodiments the branched structure is a dendritic structure.

According to certain embodiments the amount of branched polymer in the composition is at least 1 or 3 or 5 or 10 weight percent. The composition may be in a concentrated form and then mixed with a flexible acrylic resin polymer to get to the desired amount of branched polymer in the composition that is being processed (e.g. extruded, injection molded). In concentrated form, the amount of branched polymer may comprise a significant portion of the composition, for example up to 60 or 50 or 40 weight percent. For use in processing, to get the benefits of higher melt flow index (lower viscosity), the composition may according to certain embodiments comprise the branched polymer in amounts up to 30 or 25 or 20 weight percent. The branched polymer is soluble (miscible) in the flexible acrylic resin in the amounts used as is demonstrated that the composition is transparent.

The composition may be made by blending the components. According to one embodiment, the components can be cold blended (e.g. mix two aqueous latexes) and then freeze dried or coagulated. According to another embodiment the ingredients can be mixed in powder form.

The composition is useful in extruding, calendaring, and injection molding applications due to the favorable melt flow index.

The composition may be crosslinked using a UV initiator. For example, the composition may comprise a UV initiator and extruded to form a film. The resulting film may then be UV irradiated to crosslink the composition. Without wishing to be bound by theory, it is believed that the unreacted pendent double bonds of crosslinker in the branched polymer may graft the branched polymer to the flexible acrylic resin.

The composition may further comprise additional additives as are desired for the final product. Examples of such additives include UV light stabilizers and antioxidants. According to certain embodiments that additives are selected such that the composition remains transparent. Examples of UV light stabilizers include benzophenones, benzotriazoles, triazines, benzoxazinones, hindered amine light stabilizer (HALS) and hindered benzoates. Commercially available UV and light stabilizers are exemplified by Cyasorb Light Absorbers, and Light Stabilizers, and Cyasorb Cynergy Solutions from Solvay, TINUVIN FROM BASF, LowLite from Chemtura, OnCap from PolyOne, and Light Stabilizer 210 from E. I. du Pont de Nemours and Company of Delaware, U.S.A. Examples of antioxidants include phenolic antioxidants, and combinations of phenolic antioxidants with phosphites, thioethers or organic sulfides. Phenolic antioxidants include fully sterically hindered phenols and partially hindered phenols; and sterically hindered amines such as tetramethyl-piperidine derivatives. Suitable phenolic antioxidants include vitamin E and IRGANOX™ 1010 from BASF. IRGANOX™ 1010 comprises pentaerythritol tetrakis(3-(3,5-di-t-butyl-4-hydroxyphenyl)propionate). Additional examples of antioxidants are acetyl cysteine, arbutin, ascorbic acid, ascorbic acid polypeptide, ascorbyl dipalmitate, ascorbyl methylsilanol pectinate, ascorbyl palmitate, ascorbyl stearate, BHA, p-hydroxyanisole, BHT, t-butyl hydroquinone, caffeic acid, Camellia sinensis oil, chitosan ascorbate, chitosan glycolate, chitosan salicylate, chlorogenic acids, cysteine, cysteine HCl, decyl mercaptomethylimidazole, erythorbic acid, diamylhydroquinone, di-t-butylhydroquinone, dicetyl thiodipropionate, dicyclopentadiene/t-butylcresol copolymer, digalloyl trioleate, dilauryl thiodipropionate, dimyristyl thiodipropionate, dioleyl tocopheryl methylsilanol, isoquercitrin, diosmine, disodium ascorbyl sulfate, disodium rutinyl disulfate, distearyl thiodipropionate, ditridecyl thiodipropionate, dodecyl gallate, ethyl ferulate, ferulic acid, hydroquinone, hydroxylamine HCl, hydroxylamine sulfate, isooctyl thioglycolate, kojic acid, madecassicoside, magnesium ascorbate, magnesium ascorbyl phosphate, melatonin, methoxy-PEG-7 rutinyl succinate, methylene di-t-butylcresol, methylsilanol ascorbate, nordihydroguaiaretic acid, octyl gallate, phenylthioglycolic acid, phloroglucinol, potassium ascorbyl tocopheryl phosphate, thiodiglycolamide, potassium sulfite, propyl gallate, rosmarinic acid, rutin, sodium ascorbate, sodium ascorbyl/cholesteryl phosphate, sodium bisulfite, sodium erythorbate, sodium metabisulfide, sodium sulfite, sodium thioglycolate, sorbityl furfural, tea tree (Melaleuca aftemifolia) oil, tocopheryl acetate, tetrahexyldecyl ascorbate, tetrahydrodiferuloylmethane, tocopheryl linoleate/oleate, thiodiglycol, tocopheryl succinate, thiodiglycolic acid, thioglycolic acid, thiolactic acid, thiosalicylic acid, thiotaurine, retinol, tocophereth-5, tocophereth-10, tocophereth-12, tocophereth-18, tocophereth-50, tocopherol, tocophersolan, tocopheryl linoleate, tocopheryl nicotinate, tocoquinone, o-tolyl biguanide, tris(nonylphenyl) phosphite, ubiquinone, zinc dibutyldithiocarbamate, and mixtures thereof. According to certain embodiments the total amount of additives used (if any) is less than 10 or 5 or 3 weight percent based on total weight of the composition.

According to certain embodiments the composition is non-hazy. For example, a haze as measured by light transmission is less than 1% as measured according to ASTMD1003 using suitable instrument, e.g. BYKHazeGuard Plus.

According to an embodiment the composition is extruded is a thin film. The film can have a thickness of 150 or 125 or 100 microns or less. According to certain embodiments the thickness is at least 50 microns. According to an embodiment the composition is coextruded as a layer in a multi-layer film. The layer can have a thickness of 150 or 125 or 100 microns or less. According to certain embodiments the layer has a thickness of at least 10, 20, 30, or 50 microns. The film is transparent. The film does not show crease whitening.

## EXAMPLES

### Synthesis of Branched Polymer Additives

Branched polymer additives were formed by emulsion polymerization. The emulsion polymerization was carried out in a 5 liter 4-necked round bottom flask equipped with a mechanical stirrer, heating mantel, thermometer, temperature controller and $N_2$ inlet. To the reactor was charged 1530 parts of deionized water, 54.55 parts of Na-dodecyl benzene sulfonate surfactant (DS-4, 22% in water), 0.146 parts of $FeSO_4$ and 0.16 parts of acetic acid. The contents of the reactor were heated to 60 °C with an $N_2$ sweep. A monomer emulsion was prepared in a separate container with 234 parts of deionized water, 18.18 parts of DS-4 surfactant (22% in water), 53 parts of allyl methacrylate (ALMA), 696 parts of methyl methacrylate (MMA), and 52 parts of butyl 3-mercaptopropioante (BMP). Mechanical agitation was applied to effect emulsification. The total of the monomer emulsion was 1000 parts. The redox initiator system consists of 2 separate solutions. The first is a 3% (by weight) solution of t-butyl hydroperoxide (t-BHP) in water (oxidant) and the second is a 3% (by weight) solution of sodium formaldehyde sulfoxylate (SFS) in water (reductant), both 53.33 parts total. With the reactor at 60 °C simultaneous feeds (time zero) of the t-BHP and SFS solutions were started at 0.44 parts/minute (both 120 minute feed times) and the monomer emulsion at 16.67 parts/minute (a 60 minute feed time). The reactor temperature was maintained at 60 °C for the entire polymerization process. At the end of the monomer feed (total reaction time 60 minutes from time zero) the t-BHP and SFS continued for another 60 minutes (total reaction time 120 minutes from time zero). The reaction was then cooled to 40 °C and filtered through cheesecloth. The emulsion particle size was measured to be 58 nm (by light scattering), the solids content was 30.5% (by gravimetry) and the residual BA and MMA monomers were both <10 ppm (by headspace gas chromatography). The polymer formed is identified as Example 8 in Table 1 below.

The other examples were prepared by the same process described above and varying the ratio of crosslinker (ALMA) to chain transfer agent (BMP). The glass transition temperature in °C was determined by differential scanning calorimetry (DSC) and solubility was determined in tetrahydrofuran (THF). The results (average of at least 2 samples each) are shown below in Table 1. In Table 1, DP refers to the degree of polymerization, i.e., the number of units for each monomer. The number average molecular weight, $M_n$, was determined by GPC.

Table 1 (Examples 2, 3, 5-7 are not according to the invention).

| | BMP | | ALMA | | MMA | | | | |
|---|---|---|---|---|---|---|---|---|---|
| Example | wt% | DP | wt% | DP | wt% | DP | Tg (C) | THF (%) | Mn |
| 1 | 3 | 1 | 3 | 1.3 | 94 | 51 | 100 | 98 | 4248 |
| 2 | 3 | 1 | 10 | 4.3 | 87 | 47 | 106 | 14 | |
| 3 | 10 | 1 | 3 | 0.4 | 87 | 14 | 43 | 97 | 1662 |
| 4 | 10 | 1 | 10 | 1.3 | 80 | 13 | 47 | 96 | 2263 |
| 5 | 0 | 0 | 0 | 0 | 100 | high | 116 | 96 | |
| 6 | 0 | 0 | 6.5 | xl | 93.5 | xl | 129 | 6 | |
| 7 | 6.5 | 1 | 0 | 0 | 93.5 | 23 | 69 | 97 | 2042 |
| 8 | 6.5 | 1 | 6.5 | 1.3 | 87 | 22 | 75 | 97 | 2857 |
| 9 | 6.5 | 1 | 1.55 | 0.3 | 92 | 23 | 71 | 99 | 2248 |
| 10 | 6.5 | 1 | 11.5 | 2.3 | 88.6 | 20 | 80 | 41 | |
| 11 | 1.55 | 1 | 6.5 | 5.4 | 92 | 96 | 115 | 14 | |
| 12 | 11.5 | 1 | 6.5 | 0.7 | 88.6 | 12 | 39 | 99 | 1697 |

As indicated by their low solubility in THF, Examples 2, 6, 10, and 11 were determined to be crosslinked. Examples 1, 3, 4, 8, 9, and 12 were almost 100% soluble in THF.

NMR spectroscopic analysis was performed on Examples 4, 8, and 12 to determine the amount of unreacted pendent double bonds. The polymer compositions were determined based on their $^{13}C$ NMR integrals and normalized to 100%. The amount of unreacted pendent double bounds was calculated by its double carbon at ~132.0 ppm. The branched ALMA content was estimated based on its side chain -$OCH_2$ ester carbon at ~65.0 ppm. As shown in Table 2, below, at least 80% of the pendent double bonds remained unreacted.

Table 2

| Example | MMA (mol%) | BMP (mol%) | ALMA (Unreacted mol%) | ALMA (Branch wt%) | Total ALMA (mol%) | % Unreacted |
|---|---|---|---|---|---|---|
| 4 | 87.4 | 7.1 | 4.5 | 1.0 | 5.5 | 81.8 |
| 8 | 91.7 | 4.3 | 3.4 | 0.6 | 4.0 | 85.0 |
| 12 | 88.3 | 7.3 | 3.6 | 0.8 | 4.4 | 81.8 |

As a comparison, NMR analysis was performed on a branched polymer comprising 5 weight percent of BMP, 2.5 weight percent 1,4-butanediol dimethacrylate (BGDMA), 5 weight percent butyl acrylate (BA), and 87.5 weight percent MMA. As expected, around 4% of the pendent double bonds were unreacted in this comparative sample.

Films Made with FAR and Branched Polymer Additives

Films were made with a composition comprising a blend of Paraloid™ 21308XP multistage flexible acrylic resin (FAR) with a branched polymer comprising 87 weight percent MMA, 6.5 weight percent BMP, and 6.5 weight percent ALMA. The composition comprised 85 weight percent FAR and 15 weight percent branched polymer. To determine whether the unreacted pendent double bonds reacted following UV curing, samples were extracted with THF and the swell ratio of the polymer was determined. Two different UV initiators were tested, Esacure KIP150, an oligomeric alpha hydroxy ketone, and Omnirad 127D, 2-hydroxy-1-(4-(4-(2-hydroxy-2-methylpropionyl)benzyl)phenyl)-2-methylpropan-1-one, both of which are available from IGM Resins.

As shown in Table 3, both of the UV irradiated samples exhibited crosslinking of the thermoplastic matrix polymer and an increase in swell ratio of the crosslinked phase. The soluble fraction before radiation includes the soluble fraction of the FAR and all of the additive.

Table 3

| | | Branched | UV | UV | Solubles | Swell |
|---|---|---|---|---|---|---|
| Example | 21308XP (wt%) | Polymer (wt%) | Initiator | Radiated | % | Ratio |
| Control | 100 | 0 | None | None | 30.1 | 10.2 |
| 13 | 85 | 15 | KIP150 | No | 41.3 | 10.3 |
| 14 | 85 | 15 | KIP150 | Yes | 37.0 | 14.8 |
| 15 | 85 | 15 | 127D | No | 41.1 | 10.2 |
| 16 | 85 | 15 | 127D | Yes | 34.6 | 15.5 |

## Claims

1. A composition comprising:

   a multi-stage flexible acrylic resin; and
   a branched polymer which is a reaction product of reactants comprising one or more monoethylenically unsaturated ester monomers, a chain transfer agent in an amount of 0.1 to 15 weight percent, and a crosslinker in an amount of 0.1 to 15 weight percent of a crosslinker, wherein weight percent is based on total amount of reactants, provided the amount of crosslinker is within +/- 5 weight percent of the amount of chain transfer agent, wherein the crosslinker comprises at least two carbon-carbon double bonds having different reactivity.

2. The composition of claim 1 wherein the branched polymer is not cross-linked.

3. The composition of claim 1 or 2 wherein the one or more monoethylenically unsaturated ester monomers has the structure R'-C(O)O-R where R is a hydrocarbyl group of 1 to 12 carbon atoms and R' is a monoethylenically unsaturated aliphatic group having at least 2 or 3 carbon atoms.

4. The composition of any of the preceding claims wherein the chain transfer agent is selected from the group consisting of propyl mercaptan, butyl mercaptan, hexyl mercaptan, octyl mercaptan, dodecyl mercaptan, thioglycolic acid, mercaptopropionic acid, alkyl thioglycollates, mercaptoethanol, mercaptoundecanoic acid, thiolactic acid, thiobutyric acid, trimethylol propane tris(3-mercaptopropionate), pentaerythritol tetra(3-mercaptopropionate), pentaerythritol tetrathioglycollate, pentaerythritol tetrathiolactate, pentaerythritol tetrathiobutyrate; dipentaerythritol hexa(3-mercaptopropionate), dipentaerythritol hexathioglycollate; tripentaerythritol octa(3-mercaptopropionate), tripentaerythritol octathioglycollate, butyl 3-mercaptopropioante and combinations of two or more thereof.

5. The composition of any of the preceding claims wherein the cross-linker is selected from the group consisting of allyl methacrylate, allyl acrylate, and combinations thereof.

6. The composition of any of the preceding claims wherein the amount of cross-linker is from 3 to 10 weight percent.

7. The composition of any of the preceding claims wherein the amount of chain transfer agent is from 3 to 10 weight percent.

8. The composition of any of the preceding claims wherein the amount of crosslinker is within +/- 3 weight percent the amount of chain transfer agent.

9. The composition of any of the preceding claims wherein the multi-stage flexible acrylic resin is multi-stage sequential polymer composition comprising a first stage crosslinked acrylic polymer composition which forms a core, one or more intermediate layer acrylic polymer compositions, and an outer layer acrylic polymer composition wherein the

core and the intermediate layer(s) and outer layer differ in one or more of the following respects: being derived from different acrylate monomers, degree of cross linking, and glass transition temperature.

**10.** The composition of any of the preceding claims, further comprising at least one UV initiator.

**11.** The composition of any of the preceding claims comprising 50 to 99 weight percent of the multi-stage flexible acrylic resin and 1 to 50 weight percent of the branched polymer based on total weight of the composition.

**12.** A film comprising a layer of the composition of any one of claims 1-11.

**13.** The film of claim 12 having a thickness of no more than 150 microns.

**14.** The film of claim 12 or 13 which is transparent and shows no crease whitening.

## Patentansprüche

**1.** Zusammensetzung, umfassend:

ein mehrstufiges flexibles Acrylharz; und
ein verzweigtes Polymer, das ein Reaktionsprodukt von Reaktanten ist, umfassend ein oder mehrere monoethylenisch ungesättigte Estermonomere, ein Kettenübertragungsmittel in einer Menge von 0,1 bis 15 Gewichtsprozent und einen Vernetzer in einer Menge von 0,1 bis 15 Gewichtsprozent eines Vernetzers, wobei Gewichtsprozent auf einer Gesamtmenge von Reaktanten basiert, vorausgesetzt, dass die Menge des Vernetzers innerhalb von +/-5 Gewichtsprozent der Menge des Kettenübertragungsmittels ist, wobei der Vernetzer mindestens zwei Kohlenstoff-Kohlenstoff-Doppelbindungen umfasst, die eine unterschiedliche Reaktivität aufweisen.

**2.** Zusammensetzung nach Anspruch 1 wobei das verzweigte Polymer nicht vernetzt ist.

**3.** Zusammensetzung nach Anspruch 1 oder 2, wobei das eine oder die mehreren monoethylenisch ungesättigten Estermonomere die Struktur R'-C(O)O-R aufweist, wobei R eine Hydrocarbylgruppe mit 1 bis 12 Kohlenstoffatomen und R' eine monoethylenisch ungesättigte aliphatische Gruppe ist, die mindestens 2 oder 3 Kohlenstoffatome aufweist.

**4.** Zusammensetzung nach einem der vorstehenden Ansprüche, wobei das Kettenübertragungsmittel aus der Gruppe ausgewählt ist, bestehend aus Propylmercaptan, Butylmercaptan, Hexylmercaptan, Octylmercaptan, Dodecylmercaptan, Thioglykolsäure, Mercaptopropionsäure, Alkylthioglykolaten, Mercaptoethanol, Mercaptoundecansäure, Thiomilchsäure, Thiobuttersäure, Trimethylolpropantris(3-mercaptopropionat), Pentaerythritoltetra(3-mercaptopropionat), Pentaerythritoltetrathioglykolat, Pentaerythritoltetrathiolactat, Pentaerythritoltetrathiobutyrat; Dipentaerythritolhexa(3-mercaptopropionat), Dipentaerythritolhexathioglykolat; Tripentaerythritolocta(3-mercaptopropionat), Tripentaerythritoloctathioglykolat, Butyl-3-mercaptopropioant und Kombinationen von zwei oder mehr davon.

**5.** Zusammensetzung nach einem der vorstehenden Ansprüche, wobei der Vernetzer aus der Gruppe ausgewählt ist, bestehend aus Allylmethacrylat, Allylacrylat und Kombinationen davon.

**6.** Zusammensetzung nach einem der vorstehenden Ansprüche, wobei die Menge des Vernetzers von 3 bis 10 Gewichtsprozent ist.

**7.** Zusammensetzung nach einem der vorstehenden Ansprüche, wobei die Menge des Kettenübertragungsmittels von 3 bis 10 Gewichtsprozent ist.

**8.** Zusammensetzung nach einem der vorstehenden Ansprüche, wobei die Menge des Vernetzers innerhalb von +/-3 Gewichtsprozent der Menge des Kettenübertragungsmittels ist.

**9.** Zusammensetzung nach einem der vorstehenden Ansprüche, wobei das mehrstufige flexible Acrylharz eine mehrstufige sequenzielle Polymerzusammensetzung ist, umfassend eine vernetzte Acrylpolymerzusammensetzung erster Stufe, die einen Kern, eine oder mehrere Zwischenschichtacrylpolymerzusammensetzungen und eine Außenschichtacrylpolymerzusammensetzung, bildet, wobei sich der Kern und die Zwischenschicht(en) und die

Außenschicht in einem oder mehreren der folgenden Aspekte unterscheiden: einem Abgeleitetsein von unterschiedlichen Acrylatmonomeren, einem Grad der Vernetzung und einer Glasübergangstemperatur.

**10.** Zusammensetzung nach einem der vorstehenden Ansprüche, ferner umfassend mindestens einen UV-initiator.

**11.** Zusammensetzung nach einem der vorstehenden Ansprüche, umfassend zu 50 bis 99 Gewichtsprozent das mehrstufige flexible Acrylharz und zu 1 bis 50 Gewichtsprozent das verzweigte Polymer basierend auf einem Gesamtgewicht der Zusammensetzung.

**12.** Folie, umfassend eine Schicht der Zusammensetzung nach einem der Ansprüche 1 bis 11.

**13.** Folie nach Anspruch 12, die eine Dicke von nicht mehr als 150 Mikrometern aufweist.

**14.** Folie nach Anspruch 12 oder 13, die transparent ist und keine Faltenweißtrübung zeigt.

**Revendications**

**1.** Composition comprenant :

une résine acrylique souple à plusieurs étages ; et
un polymère ramifié qui est un produit de réaction de réactifs comprenant un ou plusieurs monomères d'ester à insaturation monoéthylénique, un agent de transfert de chaîne en une quantité de 0,1 à 15 pour cent en poids, et un agent de réticulation en une quantité de 0,1 à 15 pour cent en poids d'un agent de réticulation, dans laquelle le pourcentage en poids est basé sur la quantité totale de réactifs, à condition que la quantité d'agent de réticulation soit dans la plage de +/- 5 pour cent en poids de la quantité d'agent de transfert de chaîne, dans laquelle l'agent de réticulation comprend au moins deux doubles liaisons carbone-carbone ayant une réactivité différente.

**2.** Composition selon la revendication 1, dans laquelle le polymère ramifié n'est pas réticulé.

**3.** Composition selon la revendication 1 ou 2, dans laquelle le ou les monomères d'ester à insaturation monoéthylénique ont la structure R'-C(O)O-R où R est un groupe hydrocarbyle de 1 à 12 atomes de carbone et R' est un groupe aliphatique à insaturation monoéthylénique ayant au moins 2 ou 3 atomes de carbone.

**4.** Composition selon l'une quelconque des revendications précédentes, dans laquelle l'agent de transfert de chaîne est choisi dans le groupe constitué par le propyl-mercaptan, le butyl-mercaptan, l'hexyl-mercaptan, l'octyl-mercaptan, le dodécyl-mercaptan, l'acide thioglycolique, l'acide mercaptopropionique, les thioglycolates d'alkyle, le mercaptoéthanol, l'acide mercapto-undécanoïque, l'acide thiolactique, l'acide thiobutyrique, le tris(3-mercaptopropionate) de triméthylolpropane, le tétra(3-mercaptopropionate) de pentaérythritol, le tétrathioglycolate de pentaérythritol, le tétrathiolactate de pentaérythritol, le tétrathiobutyrate de pentaérythritol ; l'hexa(3-mercaptopropionate) de dipentaérythritol, l'hexathioglycolate de dipentaérythritol ; l'octa(3-mercaptopropionate) de tripentaérythritol, l'octathioglycolate de tripentaérythritol, le 3-mercaptopropionate de butyle et des combinaisons de deux de ceux-ci ou plus.

**5.** Composition selon l'une quelconque des revendications précédentes, dans laquelle l'agent de réticulation est choisi dans le groupe constitué par le méthacrylate d'allyle, l'acrylate d'allyle, et des combinaisons de ceux-ci.

**6.** Composition selon l'une quelconque des revendications précédentes, dans laquelle la quantité d'agent de réticulation va de 3 à 10 pour cent en poids.

**7.** Composition selon l'une quelconque des revendications précédentes, dans laquelle la quantité d'agent de transfert de chaîne va de 3 à 10 pour cent en poids.

**8.** Composition selon l'une quelconque des revendications précédentes, dans laquelle la quantité d'agent de réticulation est dans la plage de +/- 3 pour cent en poids de la quantité d'agent de transfert de chaîne.

**9.** Composition selon l'une quelconque des revendications précédentes, dans laquelle la résine acrylique souple à plusieurs étages est une composition de polymère séquentielle à plusieurs étages comprenant une composition de

polymère acrylique réticulé de premier étage qui forme un noyau, une ou plusieurs compositions de polymère acrylique de couche intermédiaire, et une composition de polymère acrylique de couche externe, dans laquelle le noyau et la(les) couche(s) intermédiaire(s) et la couche externe diffèrent par un ou plusieurs des aspects suivants : le fait d'être issus de monomères d'acrylate différents, le degré de réticulation ; et la température de transition vitreuse.

**10.** Composition selon l'une quelconque des revendications précédentes, comprenant en outre au moins un initiateur UV.

**11.** Composition selon l'une quelconque des revendications précédentes comprenant 50 à 99 pour cent en poids de la résine acrylique souple à plusieurs étages et 1 à 50 pour cent en poids du polymère ramifié sur la base du poids total de la composition.

**12.** Film comprenant une couche de la composition selon l'une quelconque des revendications 1 à 11.

**13.** Film selon la revendication 12 ayant une épaisseur de pas plus de 150 micromètres.

**14.** Film selon la revendication 12 ou 13 qui est transparent et ne montre aucun blanchiment à la pliure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10040915 B
- US 2017253734 A1
- WO 9804603 A
- US 4269749 A


### Non-patent literature cited in the description


- **ISAURE et al.** *J. Mater. Chem.,* 2003, vol. 13, 2701-2710
- *Journal of Physics: Conference Series,* 2016, vol. 714
- Makromolekulare Stoffe. **HOUBEN-WEYL.** Methoden der organischen Chemie. Georg-Thieme-Verlag, 1961, vol. XIV/1, 192-208